# EUROPÄISCHE PATENTSCHRIFT

(11) **EP 1 315 922 B1**
(45) Veröffentlichungstag und Bekanntmachung des Hinweises auf die Patenterteilung: **09.03.2005**
(21) Anmeldenummer: 01951352.2
(22) Anmeldetag: 30.05.2001
(51) Int. Cl.: F16H 59/10, F16H 61/22

(54) **SCHALTVORRICHTUNG EINES KRAFTFAHRZEUGGETRIEBES**
SHIFT DEVICE FOR A MOTOR VEHICLE GEARBOX
DISPOSITIF DE CHANGEMENT DE VITESSE D'UNE TRANSMISSION DE VEHICULE

(30) Priorität: 31.05.2000 DE 10026796; 09.06.2000 DE 10028649
(43) Veröffentlichungstag der Anmeldung: 04.06.2003
(73) Patentinhaber: ZF Lemförder Metallwaren AG, 49441 Lemförde (DE)
(72) Erfinder: MEYER, Jörg, 49419 Wagenfeld (DE)
(86) Internationale Anmeldenummer: PCT/DE2001/002051
(87) Internationale Veröffentlichungsnummer: WO 2001/092764

(56) Entgegenhaltungen:
- DE-A- 19 728 064
- US-A- 4 926 688
- US-A- 5 402 870
- PATENT ABSTRACTS OF JAPAN vol. 2000, no. 02, 29. Februar 2000 (2000-02-29) -& JP 11 315912 A (TOYOTA MOTOR CORP;TOKAI RIKA CO LTD), 16. November 1999 (1999-11-16)
- PATENT ABSTRACTS OF JAPAN vol. 1997, no. 11, 28. November 1997 (1997-11-28) & JP 09 189353 A (TOKAI RIKA CO LTD), 22. Juli 1997 (1997-07-22)
- PATENT ABSTRACTS OF JAPAN vol. 014, no. 075 (M-0934), 13. Februar 1990 (1990-02-13) & JP 01 293233 A (KOKUSAN KINZOKU KOGYO CO LTD), 27. November 1989 (1989-11-27)

## Beschreibung

Die Erfindung betrifft eine Schaltvorrichtung eines Getriebes, insbesondere eines Automatikgetriebes, eines Kraftfahrzeuges, welches sich in mindestens einem gesicherten und einem ungesicherten Zustand befinden kann gemäß dem Oberbegriff des Anspruches 1.

Ein solcher gesicherter Zustand der Schaltvorrichtung, genauer gesagt des Wählhebels, wird beispielsweise genutzt, um ein sogenanntes "Key Lock"- oder "Shift Lock"-System an einer Schaltvorrichtung zu verwirklichen, wobei hierdurch sichergestellt wird, daß der Wäblhebel aus einer bestimmten Stellung heraus, zum Beispiel aus der "P"-Stellung, nur dann bewegt werden kann, wenn entweder der Zündschlüssel des Fahrzeuges sich in einer bestimmten Position befindet und/oder die Bremse des Fahrzeuges betätigt ist. Dabei wird durch eine entsprechende Mechanik oder eine sonstige Vorrichtung dafür gesorgt, daß eine Entriegelung des Wählhebels nur möglich ist, wenn sich das Fahrzeug in einer bestimmten Konfiguration - z.B. Bremse betätigt - befindet, während bei anderen Fahrzeugkonfigurationen ein Entriegelung des Wählhebels und damit ein in Gang setzen des Fahrzeuges verhindert wird.

Eine gattungsgemäße Schaltvorrichtung ist beispielsweise aus der Patentschrift US 5.402.870 bekannt. Es handelt sich hierbei um eine Schaltvorrichtung für ein Automatikgetriebe, welche sich in einem gesicherten und einem ungesicherten Zustand befinden kann, wobei ein schwenkbarer Wählhebel, zur Anwahl unterschiedlicher Fahrstufen, vorliegt und der Wählhebel einen ersten Sperrmechanismus aufweist, der die Schwenkbewegung des Wählhebels sperren kann, wobei dieser erste Sperrmechanismus ein verschiebbares Sperrelement (detent pawl) aufweist, welches in eine ortsfeste Sperrkontur an einer Sperrplatte (detent plate) eingreifen kann und im Falle des Eingriffs des Sperrelementes in die Sperrkontur ein Verschwenken des Wählhebels verhindert. Weiterhin weist die Schaltvorrichtung einen zweiten Sperrmechanismus mit einem Kniehebel auf, der in einer gestreckten Sperrstellung an einem Anschlag anliegt und mittelbar über einen Bolzen durch einen Eingriff in eine axial zum Wählhebel verschieblichen Druckstange, an der das Sperrelement befestigt ist, eine Freigabe des ersten Sperrmechanismus verhindert, während der Kniehebel in abgeknickter Stellung eine Entriegelung des ersten Sperrmechanismus ermöglicht, indem der Bolzen, der die axial bewegliche Stange blockiert hat, zurückgezogen wird.

In der Sperrstellung des Kniehebels, das heißt in einer gestreckten Stellung, bei der lediglich ein ganz leichtes Einknicken des Kniehebels vorliegt, liegt die Mitte des Kniehebels, im Bereich der schwenkbaren Verbindung der beiden Schenkel des Kniehebels, an einem Anschlag an, so daß der Kniehebel seine gestreckte Stellung sicher beibehält. Soll der Kniehebel von dieser gestreckten Sperrstellung in eine abgeknickte Freigabestellung überführt werden, so greift eine elektromagnetisch gesteuerte Auslösevorrichtung an der Mitte des Kniehebels an und zieht den Kniehebel in eine abgeknickte Stellung, in der die Sperrung der verschieblichen Stange aufgehoben ist.

Der Nachteil dieser bekannten Vorrichtung liegt darin, daß eine relativ große Anzahl beweglicher Teile notwendig ist, um diese zu verwirklichen, wodurch einerseits hohe Herstellungskosten und andererseits eine große Reparaturanfälligkeit besteht.

Es ist Aufgabe der Erfindung eine Schaltvorrichtung zu finden, welche sich in mindestens einem gesicherten und einem ungesicherten Zustand befinden kann, wobei die Anzahl beweglicher Teile möglichst gering ausfallen soll.

Der Erfinder hat erkannt, daß durch eine verbesserte Anordnung des Kniehebels und einen günstigeren Angriffspunkt des Kniehebels eine wesentliche Vereinfachung der Schaltvorrichtung erreicht werden kann.

Demgemäß schlägt der Erfinder vor, die bekannte Schaltvorrichtung eines Getriebes mit den Merkmalen des Anspruchs 1 auszustatten.

Durch diese erfindungsgemäße Anordnung des mindestens einen Kniehebels wird bewirkt, daß nicht mehr das handbetätigte Mittel, welches ein Ausrücken des Sperrelementes aus der Sperrkontur bewirken kann, sondern daß der Kniehebel selbst, ohne mechanischen Umweg, direkt an dem Sperrelement angreift und dieses im gegebenen Fall blockiert, so daß eine Verschwenkung des Wählhebels nicht möglich ist. Durch diese Veränderung des Angriffspunktes des Kniehebels kann beispielsweise auf einen Bolzen am Kniehebel, wie er im Stand der Technik vorliegt und der die Bewegung einer Stange blockieren kann, verzichtet werden. Des weiteren besteht nun auch die Möglichkeit hierdurch unterschiedlich ausgebildete erste Sperrmechanismen zu blockieren.

Weiterbildungen sind in den abhängigen Ansprüchen enthalten.

Eine besondere Ausgestaltung der erfindungsgemäßen Schaltvorrichtung sieht vor, daß der am Sperrelement angreifende Schenkel des mindestens einen Kniehebels drehbeweglich mit dem Sperrelement verbunden ist, wobei vorzugsweise das Sperrelement gleichzeitig eine Drehachse des Schenkels bilden kann. Eine derartige Ausgestaltung ist beispielsweise in dem nachstehenden Ausführungsbeispiel verwirklicht. Es ist jedoch auch selbstverständlich, daß die Blockade des Sperrelementes dadurch bewirkt werden kann, daß ein Schenkel lediglich unter das entsprechende Sperrelement greift und damit eine Blockade bewirkt, ohne fest mit diesem Sperrelement verbunden sein zu müssen. Das später beschriebene Ausführungsbeispiel zeigt eine Schaltvorrichtung, bei der das Sperrelement an einer axial zum Wählhebel verschieblichen Druckstange angebracht ist, wobei die Druckstange hier auch noch im Wählhebel selbst verläuft.

Möglich ist allerdings auch eine Ausbildung, bei der das Sperrelement endseitig an einem von Hand betätigbaren Bowdenzug angebracht ist, so daß die verschiebliche Stange durch einen Bowdenzug ersetzt wird, der dann in beliebiger Weise verlegt werden kann.

Erfindungsgemäß kann auch die ortsfeste Sperrkontur beispielsweise Teil einer, mit einem Schaltvorrichtungsgehäuse verbundenen Sperrplatte sein. Jedoch ist es beispielhaft auch möglich, die Sperrkontur in anderen ortsfesten Elementen der Schaltvorrichtung, beispielsweise an einem Gehäuse, unterzubringen, so daß das Sperrelement in eine Kontur des Schaltgehäuses eingreift.

In einer weiteren besonderen Ausbildung der Schaltvorrichtung schlägt der Erfinder vor, daß der Auslösemechanismus, zum Lösen des Kniehebels aus der gestreckten Sperrstellung, ein elektromagnetisch oder hydraulisch bewegliches Druckelement, vorzugsweise einen Bolzen, aufweist, der das Einknicken des Kniehebels bewirken kann.

Wird einer elektromagnetisch bewegliches Druckelement verwirklicht, so kann beispielsweise über einen elektrischen Schalter, der mit dem Fußbremspedal verbunden ist und/oder mit einem Schalter der mit dem Zündschloß verbunden ist, die jeweilige Stellung des Kniehebels im Sinne eines "Key-Lock"- oder "Shift-Lock"-Systems verwirklicht werden.

Besonders vorteilhaft kann es allerdings auch sein, wenn die Auslösevorrichtung ein hydraulisch bewegliches Druckelement aufweist. Hierdurch kann eine hydraulische Verbindung zwischen dem Bremskreissystem und dem Druckelement hergestellt werden, so daß sich tatsächlich nur dann ein Lösen des Kniehebels ergibt, wenn sich ein entsprechender hydraulischer Druck im Bremssystem des Fahrzeuges aufbaut Das heißt das Lösen des gesicherten Zustandes wird nur dann ermöglicht, wenn die Bremsanlage tatsächlich funktioniert und nicht schon dann, wenn lediglich der Fußbremshebel betätigt wird. Hierdurch wird ein zusätzlicher Sicherheitsaspekt erreicht, da auch bei einem Ausfall des hydraulischen Systems der Biemsanlage das Fahrzeug vor dem Anfahren gesichert werden kann.

Gemäß einer weiteren Ausgestaltung der Schaltvorrichtung schlägt der Erfinder auch vor, daß der Auslösemechanismus zum Lösen des Kniehebels aus der gestreckten Sperrstellung einen Elektromagnet aufweist, wobei in der Mitte des Kniehebels ein Permanentmagnet angeordnet ist, der in der gestreckten Sperrstellung dein Elektromagnet unmittelbar gegenüberliegt und wobei zum Lösen des Kniehebels der Elektromagnet ein magnetisches Feld erzeugt, das den Permanentmagneten äbstößt.

In einer weiteren Ausführung der Schaltvoirichtong wird vorgeschlagen, daß ein Sicherungselement am Kniehebel vorgesehen ist, Welches den Kniehebel reversibel in der gestreckten Sperrstellung hält, wobei auch durch Erschütterung des Fahrzeuges nicht zufällig ein Lösen des Kniehebels bewirkt werden kann.

Ein solches Sicherungselement kann beispielsweise ein Federelement darstellen, welches an den Schenkeln des Kniehebels angreift und die Schenkel des Kniehebels, wie im später dargestellten Ausfübrungsbeispiel gezeigt, durch leichten Druck in der gestreckten Sperrstellung hält.

Eine andere Ausführung des Sicherungselementes kann darin bestehen, daß ein Permanentmagnet vorgesehen wird, der an der Achse zwischen den Schenkeln des Kniehebels angeordnet ist beziehungsweise angreift und dadurch den Kniehebel mit einer leichten magnetischen Kraft in der gestreckten Sperrstellung hält. Wird diese Variante des Sicherungselementes in Verbindung mit dem Auslösemechanismus durch einen Elektromagneten verwirklicht, so kann beispielsweise der Permanentmagneten den Kern des Elektromagneten darstellen, der im Fall des Auslösens durch einen entsprechend stärkeren Elektromagneten umgepolt wird und zu einer abstoßenden Wirkung am Kniehebel führt und dadurch ein Lösen des Kniehebels bewirkt.

In einer weiteren bevorzugten Ausführung der Schaltvorrichtung ist vorgesehen, zwei Kniehebel beidseits des Wählhebels anzubringen, wobei mindestens jeweils ein gegenüberliegendes Kniehebelschenkelpaar, vorzugsweise beide Kniehebelschenkelpaare so miteinander verbunden sein können, daß eine synchrone Bewegung der beidseits angeordneten Kniehebel erzwungen ist.

Es ist darauf hinzuweisen, daß die erfindungsgemäße Schaltvorrichtung sowohl eine Schaltdorrichtung darstellen kann, die ihre Schaltbefehle über mechanische Wege oder kraftlos, beispielsweise elektrisch oder optisch, an ein Schaltgetriebe oder Automatikgetriebe überträgt.

Weitere Merkmale und Vorteile der Erfindung ergeben sich aus den Unteransprüchen und der nachfolgenden Beschreibung eines bevorzugten Ausführungsbeispieles unter Bezugnahme auf die Zeichnungen.

Die Figuren zeigen im Einzelnen:
- Figur 1:: Seitenansicht einer Schaltvorrichtung für ein Automatikgetriebe mit Wählhebel in gesicherter "P"-Stellung mit Kniehebel in gestreckter Sperrstellung;
- Figur 2:: Querschnitt der Schaltvorrichtung mit Wählhebel in gesicherter "P"-Stelltmg mit Kniehebel in gestreckter Sperrstellung,
- Figur 3:: Seitenansicht der Schaltvorrichtung mit Wählhebel in entsicherter "P"-Stelhmg mit gelöstem Kniehebel;
- Figur 4:: Querschnitt der Schaltvorrichtung mit Wählhebel in entsicherter "P"-Stellung mit gelöstem Kniehebel;
- Figur 5:: Seitenansicht der Schaltvorrichtung mit Wählhebel in "D"-Stellung mit gelöstem Kniehebel;
- Figur 6:: Längsschnitt der Schaltvorrichtung mit Wählhebel in gesicherter "P"-Stellung mit gestrecktem Kniehebel auf Anschlag;
- Figur 7:: Längsschnitt der Schaltvorrichtung mit Wählhebel in entsicherter "P"-Stellung mit gelöstem Kniehebel.

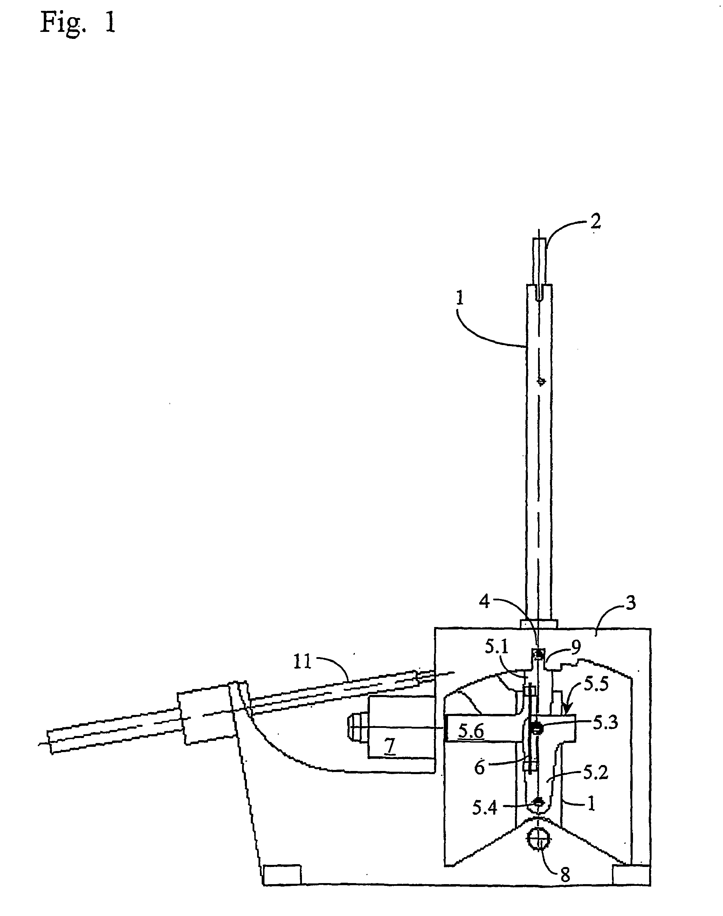

Die Figur 1 zeigt eine erfindungsgemäße Schaltvorrichtung für ein Automatikgetriebe in der Seitenansicht. Die Schaltvorrichtung verfügt über einen Wählhebel 1, in dem koaxial eine Druckstange 2 axial verschiebbar angeordnet ist. Der Wählhebel 1 ist um eine Wählachse 8 schwenkbar gelagert und befindet sich in der dargestellten Situation in einer Parkstellung ("P"-Stellung), die ein Wegrollen des Fahrzeuges verhindert. Die Druckstange 2 selbst ist mit einem Arretierungszapfen 4 verbunden und wird durch eine Spiralfeder 10, die hier nicht sichtbar ist, elastisch nach oben gedrückt, wobei der Arretierungszapfen 4 in eine Sperrkontur 9 eingreift, die an einer ortsfesten Brücke 3 angebracht ist. Durch die nach oben gerichtete Federwirkung der Spiralfeder 10, fährt der Arretierungszapfen 4 in die Sperrkontur 9 ein und verhindert in bekannter Weise das Verschwenken des Wählhebels 1.

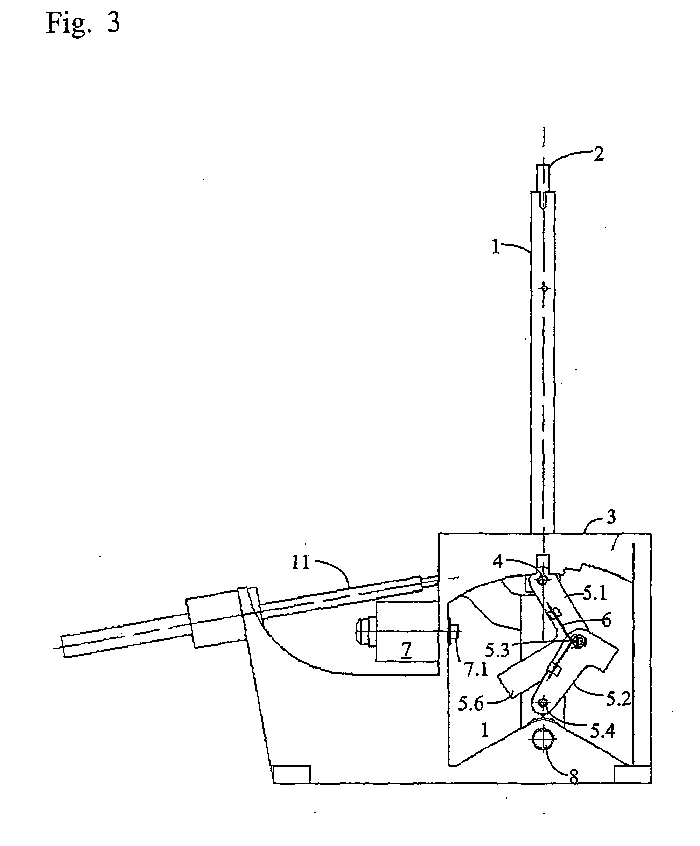

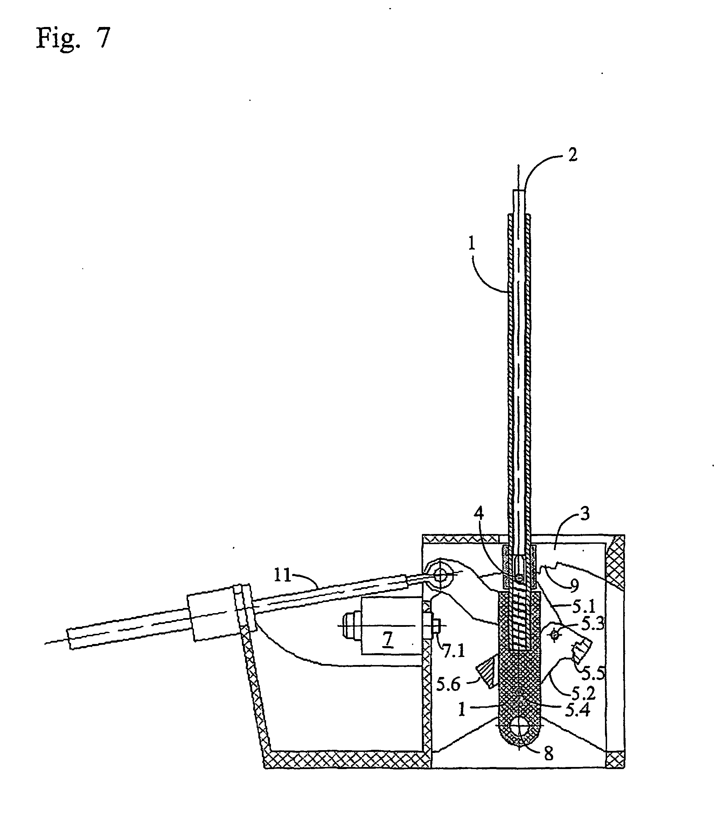

Ein ungewolltes Auslösen des Arretierungszapfens 4 aus der Sperrkontur 9 und damit des Wählhebels 1 aus der hier gezeigten Stellung wird durch einen Kniehebel 5 verhindert, der ein Ausfahren des Arretierungszapfens 4 nur in einer bestimmten Fahrzeugkonfiguration erlaubt Erfindungsgemäß wird dies hier dadurch erreicht, daß der Kniehebel mit einem oberen Schenkel 5.1 direkt am Arretierungszapfen 4, der hier als Sperrelement fungiert, angreift. Der zweite, untere Schenkel 5.2 des Kniehebels ist mit dem unteren Teil des schwenkbaren Wählhebels 1 über eine untere Kniehebelachse 5.4 verbunden. Der Arretierungszapfen 4 dient gleichzeitig als obere Kniehebelachse. Durch die gestreckte Stellung des Kniehebels 5 wird ein Lösen des Arretierungszapfens 4 und damit auch des Wählhebels 1 verhindert. Zur Auslösung des Kniehebels 5 in eine gelöste, abgeknickte Stellung ist ein Auslösemechanismus 7 vorgesehen, der in dem hier gezeigten Beispiel aus einem elektromagnetisch angetriebenen Auslösebolzen 7.1 besteht, der zur Auslösung ausfährt und senkrecht zur gestreckten "Längsachse" des Kniehebels drückt und diesen damit in eine abgeknickte, gelöste Stellung überführen kann. Hierbei drückt der im elektromagnetischen Auslösemechanismus 7 gelegene Auslösebolzen 7.1 (gezeigt in Figur 3) gegen eine rechtwinkelige Schenkelverlängerung 5.6 des oberen Schenkels des Kniehebels 5 und bewirkt somit ein Abknicken. Um ein ungewolltes Abknicken, beispielsweise durch Erschütterungen des Fahrzeuges, zu vermeiden, ist als Sicherungsvorrichtung eine Feder 6 am Knichebel 5 angebracht, die eine leichte Vorspannung des Kniehebels 5 in die Richtung der gestreckten Sperrstellung ausübt. Des weiteren verfügt der Kniehebel 5 auf der gegenüberliegenden Seite zur rechtwinkligen Schenkelverlängerung 5.6 über einen Anschlag 5.5 (gezeigt in Figur 7), der so angebracht ist, daß sich eine gestreckte Sperrstellung des Kniehebels 5 ergibt, die lediglich eine geringere Auslenkung des Kniehebels 5 in die Richtung des Auslösemechanismus 7 unter Anlehnung an den Anschlag 5.5 aufweist und dadurch für eine sichere Sperrung sorgt.

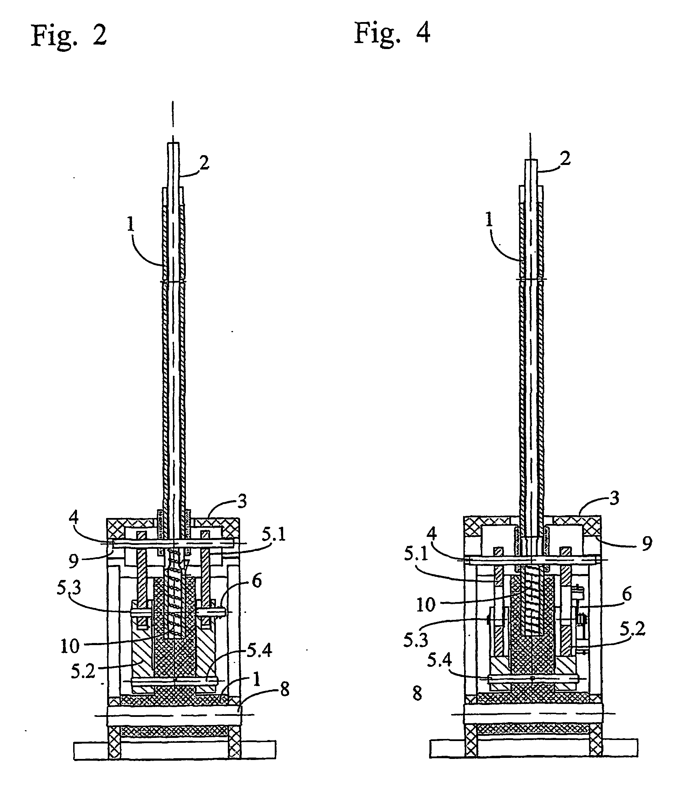

Die Figur 2 zeigt einen Querschnitt durch die erfindungsgemäße Schaltvorrichtung aus der Figur 1. Hier ist zusätzlich erkennbar, daß aus Gründen der besseren Kraftverteilung, jeweils ein Kniehebel 5 beidseits des Wählhebels 1 angebracht ist, und daß der Arretierungszapfen 4 die Druckstange 2 durchschneidet, beidseits aus dem Wählhebel 1 in einem Schlitz herausragt und gleichzeitig die obere Kniehebelachse bildet. Ebenso ist in diesem Querschnitt die Spiralfeder 10 deutlich zu erkennen, die den Arretierungszapfen 4 und damit die daran befestigte Druckstange 2 nach oben drückt. Auch zeigt die Figur 2, daß die Sperrkontur 9, die in ihrer Fortführung eine Rastierung für die verschiedenen Stellungen des Wählhebels 1 darstellt, ebenfalls auf beiden Seiten des Wählhebels 1 in einer Brücke 3 angeordnet ist.

Die Figur 3 zeigt diese Schaltvorrichtung wieder in einer Seitenansicht, entsprechend der Figur 1, wobei sich der Wählhebel 1 weiterhin in "P"-Stellung befindet. Allerdings ist durch ein Herausfahren des Auslösebolzens 7.1 ein Einknicken des Kniehebels 5 bewirkt worden, so daß sich die Druckstange 2 - wie hier gezeigt - nach unten bewegen konnte und der Arretierungszapfen 4 aus der Sperrkontur 9 ausfahren konnte, so daß ein Verschwenken des Wählhebels 1 nun möglich ist

Das Ausfahren des Auslösebolzens 7.1 kann beispielsweise dadurch geschehen, daß die Bremse im Fahrzeug betätigt wurde oder der Fahrzeugschlüssel in eine bestimmte Stellung gedreht wurde oder auch beide Bedingungen in Kombination eintreten, so daß sicher gestellt ist, das kein unbeabsichtigtes Verschwenken des Wählhebels 1 und damit ein Anfahren des Fahrzeuges stattfindet. Es ist dabei selbstverständlich, daß eine derartige erfindungsgemäße Arretierung des Wählhebels 1 nicht nur bei einem Automatikgetriebe verwendet werden kann, sondern daß auch für eine Schaltvorrichtung eines manuellen Getriebes verwendet werden kann, indem zum Beispiel der erste Gang nach dessen Einlegung gesperrt und wie hier beschrieben gesichert wird.

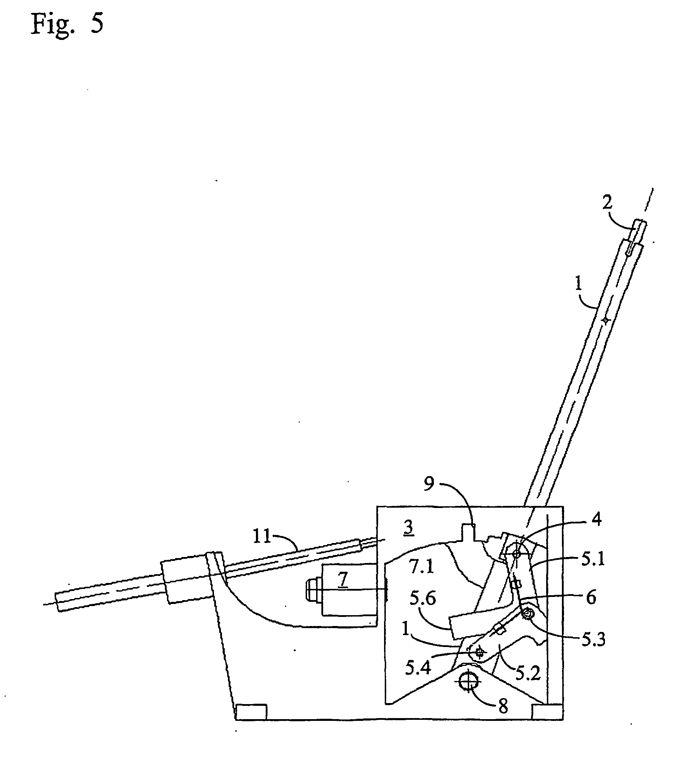

Die Figur 4 zeigt wiederum einen Querschnitt der Schaltvorrichtung aus Figur 3. Auch hier ist zu erkennen, daß die beidseits angeordneten Kniehebel 5, die im übrigen fest miteinander über die rechtwinklige Schenkelverlängerung 5.6 und über den hier nicht sichtbaren Anschlag 5.5 verbunden sind, ausgelöst wurden und sich die Druckstange 2 nach unten bewegt hat, so daß der Wählhebel 1 nun frei geschwenkt werden kann.

Insgesamt wird also ein Kniehebel 5 mit zwei um eine mittlere Kniehebelachse 5.3 verschwenkbare Kniehebelschenkeln 5.1, 5.2 so angebracht, daß ein Kniehebelschenkel 5.1 mit seinem Ende schwenkbar am Arretierungszapfen 4 angreift und der andere Kniehebelschenkel 5.2 ebenfalls schwenkbar mit dem Wählhebel 1 verbunden ist. Hierbei weist der Kniehebel einen Anschlag 5.5 auf, der in einer fast vollständig gestreckten Sperrstellung als Stütze dient, wodurch ein Lösen des Arretierungszapfens 4 verhindert wird. Durch einen Auslösemechanismus 7 wird zum Entriegeln des Kniehebels 5 eine kleine auslenkende Kraft auf die mittlere Kniehebelachse ausgeübt, so daß der Kniehebel 5 über seinen Totpunkt gedrückt wird, sich nun frei abknicken kann und anschließend durch Handbetätigung der Druckstange 2 weiter angewinkelt werden kann.

Die Figur 5 zeigt eine Seitenansicht der erfindungsgemäßen Schaltvorrichtung, in der sich der Wählhebel 1 in einer Fahrtstellung (hier "D"-Stellung) befindet. Das Kniegelenk, das mit seinem oberen Schenkel 5.1 des Kniehebelschwenkbar am Arretierungszapfen 4 befestigt ist, wird bei den Schwenkbewegungen des Wählhebels 1 mitgeschwenkt, wobei es sich frei abknicken kann. Die Sperrkontur 9 mit der weiter rechts verlaufenden Rastierung ist hierbei so angeordnet, daß stets ein Abstand zwischen der höchsten Sperrstellung und dem weiteren Verlauf der Sperrkontur besteht, wodurch der Kniehebel 5 in allen anderen Stellung als der "P"-Stellung nicht in die gestreckte Sperrstellung ausfahren und damit keine Verriegelung der Druckstange 2 bewirken kann.

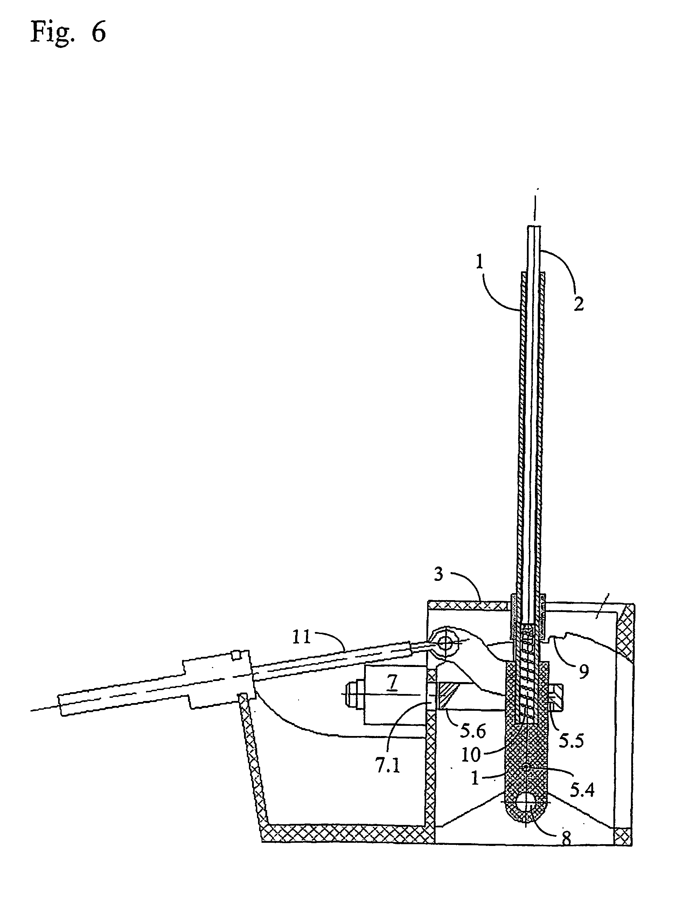

In der Figur 6 ist nochmals ein Längsschnitt durch die Schaltvorrichtung dargestellt. Der Wählhebel 1 steht hier ebenfalls wie in der Figur 1 in der "P"-Stellung und ist in der Sperrkontur 9 eingerastet, während der Kniehebel 5 sich in gestreckter Sperrstellung befindet. Auf der rechten Seite des Wählhebels 1 ist der Anschlag 5.5 des Kniehebels zu erkennen, der in der gestreckten Sperrstellung am unteren Teil des Wählhebels 1 anliegt. Gleichzeitig befindet sich die rechtwinklige Schenkelverlängerung 5.6 des Kniehebels 5 direkt am Auslösemechanismus 7 mit dem Auslösebolzen 7.1.

Anstelle der sichernden Feder 6, die hier in diesem Schnitt nur teilweise angedeutet ist, kann beispielsweise auch am linken Ende der rechtwinkligen Schenkelverbindung 5.6 ein Magnet angebracht werden, der in der gestreckten Sicherungsstellung eine Sicherungsfunktion für den Kniehebel 5 ausübt, wobei anstelle des Auslösebolzens 7.1 lediglich ein Metallkem eines Magneten angebracht werden kann, der zur Auslösung des Kniehebels 5 derart magnetisiert wird, daß eine abstoßende Kraft zwischen der rechtwinkligen Schenkelverlängerung 5.6 und dem Metallkern entsteht.

Die Figur 7 zeigt schließlich ebenfalls einen Längsschnitt durch die Schaltungsvorrichtung der Figur 3 mit dem Wählhebel 1 in "P"-Stellung und einem Kniehebel 5 in entsicherter Stellung. Der Auslösebolzen 7.1 des elektromagnetischen Auslösemechanismus 7 ist hier ausgefahren und hat den Kniehebel 5 an der rechtwinkligen Schenkelverlängerung 5.6 zur Seite gedrückt und in eine geknickte Stellung gebracht.

Bei den oben beschriebenen Figuren ist zusätzlich ein Bowdenzug 11 dargestellt, der über ein Gelenk mit dem Wählhebel 1 verbunden ist und die Wählbewegungen an ein automatisches Getriebe überträgt. Es wird darauf hingewiesen, daß die vorliegende Erfindung sich nicht ausschließlich auf die mechanische Übertragung von Wählbewegungen beschränkt, sondern daß eine derartige Ausführung auch bei Schaltvorrichtungen verwendet werden kann, die ihre Wählbefehle kraftlos, zum Beispiel optisch und elektronisch, an ein Automatikgetriebe oder ein sonstiges Fahrzeuggetriebe weitergeben.

Insgesamt wird also durch diese Erfindung eine Schaltvorrichtung vorgestellt, welche sich in einem gesicherten oder ungesicherten Zustand befinden kann, wobei die Anzahl beweglicher Teil gegenüber dem Stand der Technik reduziert wurde.

## Patentansprüche

1. Schaltvorrichtung eines Getriebes, insbesondere eines Automatikgetriebes, eines Kraftfahrzeuges, welches sich in mindestens einem gesicherten und einem ungesicherten Zustand befinden kann, mit:
einem schwenkbaren Wählhebel (1) zur Anwahl unterschiedlicher Gänge und/oder Fahrstufen,
einem ersten Sperrmechanismus, der die Schwenkbewegung des Wählhebels sperren kann, wobei der erste Sperrmechanismus ein verschiebbares Sperrelement (4) und mindestens eine ortsfeste Sperrkontur (9) zum Eingriff des Sperrelementes (4) aufweist und durch einen Eingriff des Sperrelementes (4) in die Sperrkontur (9) ein Verschwenken des Wählhebels (1) verhindert wird,
einem zweiten Spernnechanismus, welcher mindestens einen Kniehebel (5), der in einer gestreckten Sperrstellung an einem Anschlag (5.5) anliegt und die Freigabe des ersten Sperrmechanismus (4, 9) verhindert, und in abgeknickter Freigabestellung eine Entriegelung des ersten Sperrmechanismus (4, 9) ermöglicht, und
einen Auslösemechanismus (7) zum Lösen des Kniehebels (5) aus der gestreckten Sperrstellung umfasst,
**dadurch gekennzeichnet, dass**
der mindestens eine Kniehebel (5) derart angeordnet ist, daß ein Schenkel (5.1) des Kniehebels (5) mit dem Sperrelement (4) des ersten Sperrmechanismus unmittelbar verbunden ist.

2. Schaltvorrichtung nach Anspruch 1,
**dadurch gekennzeichnet, dass**
der am Sperrelement (4) angreifende Schenkel (5.1) des mindestens einen Kniehebels (5) drehbeweglich mit dem Sperrelement (4) verbunden ist, wobei das Sperrelement (4) gleichzeitig eine Drehachse des Schenkels (5.1) bildet.

3. Schaltvorrichtung nach einem der vorstehenden Ansprüche,
**dadurch gekennzeichnet, dass**
das Sperrelement (4) an einer axial zum Wählhebel (1) verschieblichen Druckstange (2) angebracht ist, die im Wählhebel (1) verläuft.

4. Schaltvorrichtung nach einem der vorstehenden Ansprüche 1-2,
**dadurch gekennzeichnet, dass**
das Sperrelement (4) endseitig an einem von Hand betätigbaren Bowdenzug angebracht ist

5. Schaltvorrichtung nach einem der vorstehenden Ansprüche,
**dadurch gekennzeichnet, dass**
die ortsfeste Sperrkontur (9) Teil einer, mit einem Schaltvorrichtungsgehäuse verbundenen, Sperrplatte oder Brücke (3) ist.

6. Schaltvorrichtung nach einem der vorstehenden Ansprüche,
**dadurch gekennzeichnet, dass**
der Auslösemechanismus (7) zum Lösen des mindestens einen Kniehebels (5) aus der gestreckten Sperrstellung ein elektromagnetisch oder hydraulisch bewegliches Druckelement, vorzugsweise einen Bolzen (7.1), aufweist, das ein Einknicken des Kniehebels (5) bewirken kann.

7. Schaltvorrichtung nach einem der vorstehenden Ansprüche 1-5,
**dadurch gekennzeichnet, dass**
der Auslösemechanismus (7) zum Lösen des mindestens einen Kniehebels (5) aus der gestreckten Sperrstellung einen Elektromagnet aufweist, wobei in der Mitte des Kniehebels ein Permanentmagnet angeordnet ist, der in der gestreckten Sperrstellung dem Elektromagnet unmittelbar gegenüberliegt, wobei zum Lösen der Elektromagnet ein magnetisches Feld erzeugt, das den Permanentmagneten abstößt.

8. Schaltvorrichtung nach einem der vorstehenden Ansprüche 1-7,
**dadurch gekennzeichnet, dass**
ein Sicherungselement (6) an dem zumindest einem Kniehebel (5) vorgesehen ist, welches den Kniehebel (5) reversibel in der gestreckten Sperrstellung hält.

9. Schaltvorrichtung nach dem vorstehenden Anspruch 8,
**dadurch gekennzeichnet, dass**
das Sicherungselement ein Federelement (6) ist, das an den Schenkeln (5.1, 5.2) des mindestens einen Kniehebels (5) angreift.

10. Schaltvorrichtung nach dem vorstehenden Anspruch 8,
**dadurch gekennzeichnet, dass**
das Sicherungselement ein Permanentmagnet ist, der an der Achse zwischen den Schenkeln (5.1, 5.2) des mindestens einen Kniehebels (5) angreift.

11. Schaltvorrichtung nach einem der vorstehenden Ansprüche 1-10,
**dadurch gekennzeichnet, dass**
zwei Kniehebel beidseits des Wählhebels (1) vorgesehen sind.

12. Schaltvorrichtung dem vorstehenden Anspruch 11,
**dadurch gekennzeichnet, dass**
zumindest die beiden ersten Schenkel (5.1) oder die beiden zweiten Schenkel (5.2) der zwei beidseits des Wählhebels angeordneten Kniehebel miteinander verbunden sind.

## Claims

1. Shift device of a gearbox, in particular of an automatic gearbox, of a motor vehicle, which can be in at least one secured and one unsecured state, with:
a pivotable selector lever (1) for selecting different gears and/or gear ranges,
a first blocking mechanism which can block the pivotal movement of the selector lever, wherein the first blocking mechanism comprises a displaceable blocking element (4) and
at least one stationary blocking contour (9) for engaging the blocking element (4) and, through an engagement of the blocking element (4) in the blocking contour (9), prevents the selector lever (1) from pivoting,
a second blocking mechanism which comprises at least one toggle lever (5) which, when in an elongate blocking position, lies against a stop (5.5) and prevents the first blocking mechanism (4, 9) from being released and, when in the deflected release position, allows the first blocking mechanism (4, 9) to be unlocked, and
a release mechanism (7) for releasing the toggle lever (5) from the elongate blocking position,
**characterised in that**
the at least one toggle lever (5) is disposed such that one arm (5.1) of the toggle lever (5) is directly connected to the blocking element (4) of the first blocking mechanism.

2. Shift device according to Claim 1,
**characterised in that**
the arm (5.1) of the at least one toggle lever (5) which acts on the blocking element (4) is rotatably connected to the blocking element (4), wherein the blocking element (4) at the same time forms a pivot of the arm (5.1).

3. Shift device according to any one of the preceding Claims,
**characterised in that**
the blocking element (4) is fitted to a push rod (2) which can be displaced axially to the selector lever (1) and extends in the selector lever (1).

4. Shift device according to any one of the preceding Claims 1-2,
**characterised in that**
the blocking element (4) is fitted at the end to a manually operable Bowden cable.

5. Shift device according to any one of the preceding Claims,
**characterised in that**
the stationary blocking contour (9) is part of a blocking plate or bridge (3) which is connected to a shift device casing.

6. Shift device according to any one of the preceding Claims,
**characterised in that**,
in order to release the at least one toggle lever (5) from the elongate blocking position, the release mechanism (7) comprise an electromagnetically or a hydraulically movable pressure element, preferably a pin (7.1), which can cause the toggle lever (5) to fold in.

7. Shift device according to any one of the preceding Claims 1-5,
**characterised in that**,
in order to release the at least one toggle lever (5) from the elongate blocking position, the release mechanism (7) comprises an electromagnet, wherein a permanent magnet is disposed in the centre of the toggle lever and lies directly opposite the electromagnet in the elongate blocking position, wherein the electromagnet generates a magnetic field, which repels the permanent magnet, in order to effect the release.

8. Shift device according to any one of the preceding Claims 1-7,
**characterised in that**
a safety element (6) is provided at the at least one toggle lever (5) to hold the toggle lever (5) reversibly in the elongate blocking position.

9. Shift device according to the preceding Claim 8,
**characterised in that**
the safety element is a spring element (6) which acts on the arms (5.1, 5.2) of the at least one toggle lever (5).

10. Shift device according to the preceding Claim 8,
**characterised in that**
the safety element is a permanent magnet which acts on the pivot between the arms (5.1, 5.2) of the at least one toggle lever (5).

11. Shift device according to any one of the preceding Claims 1-10,
**characterised in that**
two toggle levers are provided on both sides of the selector lever (1).

12. Shift device according to the preceding Claim 11,
**characterised in that**
at least the two first arms (5.1) or the two second arms (5.2) of the two toggle levers disposed on both sides of the selector lever are connected together.

## Revendications

1. Dispositif de commutation d'une boîte de vitesses, en particulier d'une boîte de vitesses automatique, d'un véhicule automobile, laquelle peut se trouver dans au moins un état verrouillé et un état déverrouillé, comprenant :
un levier de sélection pivotant (1) destiné à la sélection de différentes vitesses et/ou crans de marche,
un premier mécanisme de blocage, qui peut bloquer le mouvement pivotant du levier de sélection, le premier mécanisme de blocage présentant un élément de blocage coulissant (4) et au moins un contour de blocage fixe (9) en vue de l'engrènement de l'élément de blocage (4) et un pivotement du levier de sélection (1) étant empêché par un engrènement de l'élément de blocage (4) dans le contour de blocage (9),
un second mécanisme de blocage, lequel comprend au moins un levier à genouillère (5) qui est ajusté dans une position de blocage étendue contre une butée (5.5), qui empêche la libération du premier mécanisme de blocage (4, 9) et qui permet un déverrouillage du premier mécanisme de blocage (4, 9) en position de libération courbée, et
un mécanisme de déclenchement (7) destiné au déblocage du levier à genouillère (5) hors de la position de blocage étendue,
**caractérisé en ce que**
l'au moins un levier à genouillère (5) est disposé de telle manière qu'un côté (5.1) du levier à genouillère (5) est assemblé directement avec l'élément de blocage (4) du premier mécanisme de blocage.

2. Dispositif de commutation selon la revendication 1,
**caractérisé en ce que**
le côté (5.1) de l'au moins un levier à genouillère (5) attaquant sur l'élément de blocage (4) est assemblé en mouvement de rotation avec l'élément de blocage (4), l'élément de blocage (4) formant en même temps un axe de rotation du côté (5.1).

3. Dispositif de commutation selon l'une quelconque des revendications précédentes,
**caractérisé en ce que**
l'élément de blocage (4) est placé sur une tige de compression (2) coulissante axialement par rapport au levier de sélection (1), ladite tige de compression évoluant dans le levier de sélection (1).

4. Dispositif de commutation selon l'une quelconque des revendications précédentes 1 à 2,
**caractérisé en ce que**
l'élément de blocage (4) est placé côté extrémité sur un câble Bowden activable à main.

5. Dispositif de commutation selon l'une quelconque des revendications précédentes,
**caractérisé en ce que**
le contour de blocage fixe (9) fait partie d'une plaque de blocage ou pont (3) assemblé avec un boîtier de dispositif de commutation.

6. Dispositif de commutation selon l'une quelconque des revendications précédentes,
**caractérisé en ce que**
le mécanisme de déclenchement (7) destiné au déblocage de l'au moins un levier à genouillère (5) d'un hors de la position de blocage étendue présente un élément de compression mobile de façon électromagnétique ou hydraulique, de préférence un boulon (7.1), qui peut provoquer un pliage du levier à genouillère (5).

7. Dispositif de commutation selon l'une quelconque des revendications précédentes 1 à 5,
**caractérisé en ce que**
le mécanisme de déclenchement (7) destiné au déblocage de l'au moins un levier à genouillère (5) d'un hors de la position de blocage étendue présente un électroaimant, un aimant permanent étant disposé au centre du levier à genouillère, ledit aimant permanent faisant directement face à l'électroaimant dans la position de blocage étendue, un champ magnétique étant généré en vue du déblocage de l'électroaimant, ledit champ magnétique repoussant l'aimant permanent.

8. Dispositif de commutation selon l'une quelconque des revendications précédentes 1 à 7,
**caractérisé en ce que**
un élément de sécurité (6) est prévu sur l'au moins un levier à genouillère (5), lequel maintient réversiblement le levier à genouillère (5) dans la position de blocage étendue.

9. Dispositif de commutation selon la revendication 8,
**caractérisé en ce que**
l'élément de sécurité est un élément élastique (6) qui attaque sur les côtés (5.1, 5.2) de l'au moins un levier à genouillère (5).

10. Dispositif de commutation selon la revendication 8,
**caractérisé en ce que**
l'élément de sécurité est un aimant permanent qui attaque sur l'axe entre les côtés (5.1, 5.2) de l'au moins un levier à genouillère (5).

11. Dispositif de commutation selon l'une quelconque des revendications précédentes 1 à 10,
**caractérisé en ce que**
deux leviers à genouillère sont prévus des deux côtés du levier de sélection (1).

12. Dispositif de commutation selon la revendication 11,
**caractérisé en ce que**
au moins les deux premiers côtés (5.1) ou les deux seconds côtés (5.2) des deux leviers à genouillère disposés des deux côtés du levier de sélection sont liés l'un à l'autre.
